# NEUE EUROPÄISCHE PATENTSCHRIFT

(11) **EP 1 027 784 B2**
(45) Veröffentlichungstag und Bekanntmachung des Hinweises auf die Entscheidung über den Einspruch: **26.05.2010**
(45) Hinweis auf die Patenterteilung: 20.02.2002
(21) Anmeldenummer: 98959799.2
(22) Anmeldetag: 24.10.1998
(51) Int. Cl.: H04L 9/32

(54) **VERFAHREN ZUM DIGITALEN SIGNIEREN EINER NACHRICHT**
METHOD FOR DIGITAL SIGNING OF A MESSAGE
PROCEDE POUR LA SIGNATURE NUMERIQUE D'UN MESSAGE

(30) Priorität: 28.10.1997 DE 19747603
(43) Veröffentlichungstag der Anmeldung: 16.08.2000
(73) Patentinhaber: First Data Mobile Holdings Limited, Dublin 1 (IE)
(72) Erfinder: RÖVER, Stefan, D-71088 Holzgerlingen (DE); GROFFMANN, Hans-Dieter, D-72145 Hirrlingen (DE)
(74) Vertreter: Frohwitter, Bernhard
(86) Internationale Anmeldenummer: PCT/EP1998/006769
(87) Internationale Veröffentlichungsnummer: WO 1999/022486

(56) Entgegenhaltungen:
- EP-A- 0 689 316
- WO-A-96/32700
- WO-A-97/37461
- COMBANIERE C: "NOUVELLES POSSIBILIT S DE PAIEMENT" REE: REVUE GENERALE DE L ELECTRICITE ET DE L ELECTRONIQUE, Nr. 4, 1. Oktober 1995, Seiten 57-65, XP000533330

## Beschreibung

Die vorliegende Erfindung betrifft ein Verfahren zum digitalen Signieren einer Nachricht sowie die zur Durchführung dieses Verfahrens benötigten Vorrichtungen.

Digitale Signaturen, also elektronische Unterschriften, werden üblicherweise mit Hilfe von sogenannten Public-Key-Verfahren realisiert. Dabei wird einem Signierer ein Schlüsselpaar zugeordnet, das einen geheimen und einen öffentlichen Schlüssel umfaßt. Mittels des geheimen Schlüssels wird durch ein mathematisches Verfahren eine Signatur erzeugt, während mit dem zugehörigen öffentlichen Schlüssel diese Signatur überprüft werden kann. Der geheime Schlüssel steht ausschließlich unter der Kontrolle des Signierers, so daß niemand im Namen des Signierers unterschreiben kann. Der öffentliche Schlüssel hingegen kann veröffentlicht werden, so daß jeder die Signatur prüfen kann. In der Regel wird der geheime Schlüssel über ein Kennwort (PIN) geschützt, so daß zur Durchführung einer Signatur das Wissen über das Kennwort und der Besitz des geheimen Schlüssels notwendig sind.

Digitale Signaturen können in einem Rechner, zum Beispiel in einem PC, mit Hilfe von Software-Programmen erzeugt werden. Üblicherweise wird dabei der zugehörige geheime Schlüssel auf einer Festplatte oder einer Diskette gespeichert und zur Erzeugung der Signatur in den Hauptspeicher geladen. Meistens wird der geheime Schlüssel selbst wiederum in verschlüsselter Form gespeichert und über ein Kennwort geschützt, welches der Eigentümer beim Signieren über die Software angeben muß. So soll sichergestellt werden, daß nur der Inhaber des geheimen Schlüssels diesen auch zum Signieren verwenden kann. Da keine zusätzliche Hardware benötigt wird, ist dieses Verfahren kostengünstig. Als Nachteil erweist sich, daß sich der Benutzer auf die Integrität der Signatur-Software verlassen muß und diese im allgemeinen als nicht ausreichend sicher angesehen wird.

Als weitere Alternative zur Erzeugung von digitalen Signaturen in einem Rechner dienen Hardware-basierte Verfahren. Diese verwenden zum Signieren spezialisierte Geräte, bei denen die Darstellungskomponente und die Tastatur per Hardware so mit der Signierkomponente gekoppelt sind, daß auf die Verbindung kein Einfluß genommen werden kann. Diese Geräte werden in der Regel über eine galvanische Verbindung, beispielsweise ein Kabel zur seriellen Schnittstelle, mit dem Rechner verbunden. Diese Geräte verfügen über eine eigene Darstellungskomponente, die die zu signierende Nachricht anzeigt und über eine eigene Tastatur, das sogenannte PIN-Pad, über welche das Kenntwort zum Freischalten des Schlüssels eingegeben wird. Üblicherweise wird der geheime Schlüssel nicht im Signiergerät gespeichert, sondern auf einer Chip-Karte, die in das Gerät eingeführt werden kann. Die eigentliche Signatur kann auf der Chip-Karte erzeugt werden (bei Chip-Karten mit eigenem Kryptoprozessor) oder aber im Gerät. Das beschriebene Hardware-basierte Verfahren stellt ein abgeschlossenes Signiersystem aus Darstellungskomponente, Tastatur, Lesegerät und Chip-Karte dar.

Im Unterschied zu den Software-basierten Verfahren sind Hardware-basierte Verfahren erheblich sicherer, wobei jedoch deren Kosten höher sind. Demgemäß werden gegenwärtig sogenannte gemischte Verfahren eingesetzt. Dabei werden die geheimen Schlüssel meistens auf einer Chip-Karte gespeichert und über ein Lesegerät verfügbar gemacht. Die übrigen Aufgaben wie Darstellung, Eingabe des Kennworts und Erzeugung der Signatur erfolgen ganz oder teilweise im Rechner. Dabei kann vorgesehen sein, daß das Signiergerät, das heißt der Leser und die Chip-Karte, als reines Speichermedium für den geheimen Schlüssel verwendet wird, während die Darstellung, die Eingabe des Kennwortes und die Erzeugung der Signatur vollständig im Rechner erzeugt werden.

Alternativ kann vorgesehen sein, die Darstellung und die Eingabe des Kennwortes über den Rechner erfolgen zu lassen, wobei das Signiergerät zusätzlich zur Speicherung des geheimen Schlüssels auch zur Erzeugung der Signatur verwendet wird. Schließlich existiert die Variante, daß nur die Darstellung im Rechner erfolgt. Das Signiergerät verfügt in dieser Variante über eine eigene Tastatur oder ist direkt mit der Rechner-Tastatur unter Umgehung der Rechner-Software verbunden. Die Signatur wird im Signiergerät erzeugt. Je mehr Aufgaben dabei von der Rechner-Software übernommen werden und je weniger das Signiergerät leisten muss, desto kostengünstiger ist das Verfahren.

Die WO 96/32700 offenbart ein Verfahren gemäß dem eine in einem Mobilfunktelefon erzeugte Nachricht digital signiert und weitergeleitet wird. Die EP 0 689 316 A2 offenbart ein Verfahren und eine Einrichtung zur Identifizierung und Verifizierung von Daten in einem Kommunikationsnetzwerk.

Grundsätzlich besteht in all diesen Ausführungsformen jedoch das Problem, dass genau die Daten signiert werden müssen, die der Benutzer signieren möchte. Es muss also ausgeschlossen werden, dass ein Virus beispielsweise die Daten während der Übertragung von der Darstellungskomponente, zum Beispiel dem Display, an die Signierkomponente, zum Beispiel den Kryptoprozessor, verändert. Ferner muss sichergestellt werden, dass eine Geheimzahl (zum Beispiel PIN), die zur Auslösung der Signaturen notwendig ist, nicht von anderen Programmen von der Tastatur mitgelesen werden kann und Dritten bekannt wird.

Zudem wird der möglichst flächendeckende Einsatz der Möglichkeit zur digitalen Signatur durch die vergleichsweise geringe Verbreitung von Signiergeräten eingeschränkt. In potentiellen Anwendungsbereichen digitaler Signaturen, wie beispielsweise dem Internet-Banking, müsste demgemäss eine kosten aufwendige Infrastruktur zur Verbreitung der Signiergeräte geschaffen werden. Problematisch ist dabei auch die Installation von Signiergeräten am Rechner. Einerseits müssen die Geräte physikalisch mit dem Rechner verbunden werden, wobei die seriellen Schnittstellen eines PC häufig bereits belegt sind. Alternative Verfahren zur Anbindung der Signiergeräte an Rechner sind ebenfalls problematisch, da hierfür zumindest die Installation von Software-Treibern und manchmal auch von zusätzlicher Hardware notwendig ist. Zusätzlich müssen für alle Signiergeräte häufig spezielle Software-Komponenten installiert werden, die es dem Anwendungsprogramm erlauben, mit dem Signiergerät zu kommunizieren.

Ein weiteres Problem der herkömmlichen Verfahren zur digitalen Signatur besteht darin, dass diese standortabhängig sind. Bestimmte Anwendungsbereiche für den Einsatz digitaler Signaturen, wie beispielsweise das Internet-Banking, sind aufgrund überall zugänglicher öffentlicher Internet-Terminals standortunabhängig. Würden diese Internet-Banking-Anwendungen nun mit den bekannten standortabhängigen Verfahren zur digitalen Signatur kombiniert werden, wäre die Standortunabhängigkeit dieser Anwendungsbereiche verloren.

Das der vorliegenden Erfindung zugrundeliegende technische Problem besteht also darin, ein kostengünstiges, leicht zu realisierendes und standortunabhängiges Verfahren zum digitalen Signieren von Nachrichten sowie dafür geeignete Vorrichtungen bereitzustellen.

Dieses technische Problem wird durch die Lehre gemäß Hauptanspruch gelöst.

Im Zusammenhang mit der vorliegenden Erfindung wird unter einem digitalen Signieren einer Nachricht ein Vorgang verstanden, bei dem auf elektronischem Wege der Wille zur Abgabe und der Inhalt einer Nachricht bestätigt wird. Dies geschieht durch partielle oder vollständige Verschlüsselung der zu signierenden Nachricht oder durch Verschlüsselung einer kryptographischen Prüfsumme dieser Nachricht in eine signierte Nachricht mittels eines geheimen Schlüssels unter Anwendung eines mathematischen Verfahrens. Im Zusammenhang mit der vorliegenden Erfindung wird unter einer signierten Nachricht entweder die signierte Nachricht als ganze oder die Signatur selbst verstanden. Die Signierung dient dazu, später eine Authentifizierung des Nutzers durchführen zu können. Im Zusammenhang mit der vorliegenden Erfindung wird also unter einer signierten Nachricht auch nur die elektronisch erzeugte Signatur der Nachricht verstanden. Im Zusammenhang mit der vorliegenden Erfindung wird unter einer Nachricht jegliche Art von in elektronischer Form wiedergebbarer Information, beispielweise Zahlen, Buchstaben, Zahlenkombinationen, Buchstabenkombinationen, Grafiken, Tabellen etc. verstanden. Im Zusammenhang mit der vorliegenden Erfindung wird unter einem Signiergerät eine Einheit verstanden, die eine Signierung einer Nachricht durchführen kann, das heißt einen geheimen Schlüssel, ein mathematisches Verschlüsselungsverfahren, Dialogmöglichkeiten mit dem Signierer oder Nutzer, gegebenenfalls notwendigen Schnittstellen und eine Sende- und Empfangsvorrichtung aufweist. Diese Einheit kann aus verschiedenen Elementen, zum Beispiel aus einer Chip-Karte und einem Lesegerät oder einer Chip-Karte und einem Mobilfunktelefon, aufgebaut sein. Eine Signiervorrichtung ist im Zusammenhang mit der vorliegenden Erfindung eine Komponente des Signiergeräts, die den geheimen Schlüssel und/oder das Verschlüsselungsverfahren und/oder eine Schnittstelle zu beiden oder einer der vorgenannten Komponenten aufweist.

Aufgrund der erfindungsgemäß besonders bevorzugten Verwendung des Funktelefonnetzes zur Übertragung der zu signierenden Nachrichten an ein Signiergerät, das in vorteilhafter Ausgestaltung als Mobilfunktelefon ausgeführt ist, ist es möglich, von einem handelsüblichen Rechner mit Anschluß an einen entsprechenden Nachrichten-Server, zum Beispiel via e-Mail, Nachrichten an das Signiergerät zu übermitteln, ohne am Rechner selbst Installationen oder andere Veränderungen vornehmen zu müssen.

In besonders bevorzugter Ausführungsform sieht die Erfindung ein Verfahren der vorgenannten Art vor, wobei die zu signierende Nachricht von einer auch als Nachrichtenquelle zu bezeichnenden Sendevorrichtung, beispielsweise einem PC, an eine Empfangsvorrichtung, beispielsweise einen Nachrichten-Server, übertragen wird, anschließend diese Nachricht von der Empfangsvorrichtung an ein der Sendevorrichtung zugeordnetes Signiergerät, insbesondere Mobilfunktelefon übertragen wird, anschließend diese Nachricht im Mobilfunktelefon signiert wird, und sodann an die Empfangsvorrichtung als Signatur, das heißt als signierte Nachricht, zurückübertragen wird.

Die Erfindung sieht also vor, daß von einer Nachrichtenquelle eine unsignierte bzw. zu signierende Nachricht an eine Empfangsvorrichtung, zum Beispiel einen Nachrichten-Server, übertragen wird. Die Empfangsvorrichtung nimmt dann eine Zuordnung der zu signierenden Nachricht zu dem Signiergerät, insbesondere dem Mobiltelefon, vor. Dies geschieht entweder durch eine in der Empfangsvorrichtung hinterlegte Dokumentation oder über Informationen, die zusammen mit der zu signierenden Nachricht von der Sendevorrichtung an die Empfangsvorrichtung übertragen wurde. Die Zuordnung des Signiergeräts, vorteilhafterweise des Mobilfunktelefons, zu der Nachrichtenquelle braucht also keine räumliche Zuordnung zu sein, sondern ist eine rein informatorische Zuordnung. Die Zuordnung besteht also darin, festzustellen, welches Signiergerät und damit welcher Nutzer die empfangene, zu signierende Nachricht signieren soll. Das in bevorzugter Ausführungsform der Erfindung eingesetzte Mobilfunktelefon ist in vorteilhafter Weise in der Lage, eine zu signierende Nachricht darzustellen und auf Anweisung des Nutzers und unter Zuhilfenahme der in vorteilhafter Weise eingesetzten Chip-Karte zu signieren. Die auf diese Weise signierte Nachricht wird der Empfangsvorrichtung übermittelt und dort gegebenenfalls mit der ursprünglichen Nachricht verglichen und authentifiziert. Von der Empfangsvorrichtung wird die signierte und gegebenenfalls authentifizierte Nachricht dann an einen Adressaten weitervermittelt.

Die Erfindung betrifft auch ein vorgenanntes Verfahren, wobei in vorteilhafter Weise vorgesehen ist, zum Signieren ein Public-Key-Verfahren einzusetzen, bei dem die Sendevorrichtung über einen ihr zugeordneten geheimen Schlüssel und die Empfangsvorrichtung über den entsprechenden, dem geheimen Schlüssel zugeordneten öffentlichen Schlüssel verfügt. Diese Vorgehensweise bietet den Vorteil, daß die Schlüssel nicht übermittelt werden müssen.

In einer weiteren vorteilhaften Ausgestaltung betrifft die Erfindung ein vorgenanntes Verfahren, wobei die zu signierende Nachricht oder die bereits signierte Nachricht, das heißt zum Beispiel die Signatur zwischen Empfangsvorrichtung und Signiergerät, insbesondere Mobilfunktelefon, mittels des Short-Message-Service (SMS) übertragen werden. In besonders bevorzugter Ausführungsform kann vorgesehen sein, daß sowohl die Übertragung der zu signierenden Nachricht von der Empfangsvorrichtung zum Mobilfunktelefon als auch die Übertragung der signierten Nachricht bzw. der Signatur vom Mobilfunktelefon zur Empfangsvorrichtung mittels des SMS durchgeführt wird.

Die Erfindung sieht in einer weiteren Ausführungsform vor, daß die zu signierende Nachricht mittels einer im Mobilfunktelefon vorgesehenen Anzeigeeinrichtung dargestellt wird. Dies kann auf dem Display handelsüblicher Mobilfunktelefone geschehen. Auf diese Weise lassen sich ohne weiteres einfache Texte, wie zum Beispiel Banktransaktionen oder sogar einfache Grafiken, darstellen.

Im Anschluß an diese gegebenenfalls vorgesehene Darstellung gibt der Benutzer in einem dafür vorgesehenen Dialog eine entsprechende Anweisung zur Auslösung des Signierens. In besonders bevorzugter Ausführungsform sieht die Erfindung ein Verfahren der vorgenannten Art vor, wobei der zum Signieren notwendige geheime Schlüssel in einer Chip-Karte des Mobilfunktelefons abgelegt ist und dieser Schlüssel mittels einer über eine Tastatur des Mobilfunktelefons eingebbaren Geheimzahl (im folgenden PIN genannt) freigegeben wird. In vorteilhafter Weise kann durch eine entsprechende übliche Programmierung des Mobilfunktelefons sichergestellt werden, daß die eingegebene PIN nur auf die Chip-Karte übertragen wird und nicht von außen abgehört werden kann.

In einer weiteren alternativen Ausgestaltung der vorgenannten erfindungsgemäßen Verfahren ist vorgesehen, daß der zum Signieren notwendige geheime Schlüssel über eine Tastatur des Mobilfunktelefons eingegeben wird.

In einer weiteren bevorzugten Ausführungsform der Erfindung ist vorgesehen, daß in einem der vorgenannten Verfahren der geheime Schlüssel nicht nur auf der Chip-Karte des Mobilfunktelefons gespeichert ist, sondern dort auch das Signieren der Nachricht durchgeführt wird. Damit kann in vorteilhafter Weise sichergestellt werden, daß der geheime Schlüssel auf keinen Fall die Chip-Karte verläßt und damit von Unbefugten verwendet werden kann.

In einer weiteren vorteilhaften Ausgestaltung der Erfindung ist vorgesehen, daß das Mobilfunktelefon nicht nur zum Signieren der Nachricht, sondern zusätzlich auch als Sender zur Übermittlung der signierten Nachricht an die Empfangsvorrichtung eingesetzt wird.

Die Erfindung betrifft auch Vorrichtungen zur Durchführung der vorgenannten Verfahren, insbesondere Mobilfunktelefone und Chip-Karten.

In einer besonders bevorzugten Ausführungsform der Erfindung ist ein Mobilfunktelefon vorgesehen, das eine Tastatur, eine Anzeigevorrichtung und eine Chip-Karten-Einrichtung zum Lesen und/oder Schreiben einer in das Mobilfunktelefon einsteckbaren Chip-Karte umfaßt, wobei zusätzlich eine Signiervorrichtung vorgesehen ist, die beispielsweise zur Kommunikation mit einer erfindungsgemäßen Chip-Karte und/oder zur Erstellung einer signierten Nachricht aus einer zu signierenden Nachicht geeignet ist. In vorteilhafter Weise ist die Signiervorrichtung mit der Tastatur zur Eingabe eines geheimen Schlüssels oder einer Geheimzahl verbunden.

In besonders vorteilhafter Ausgestaltung des vorgenannten Mobilfunktelefons ist vorgesehen, daß die Signiervorrichtung eine gegenüber der herkömmlichen Softwarekomponente eines Mobilfunktelefons geänderte Softwarekomponente darstellt. Diese geänderte Softwarekomponente ist in einer bevorzugten Ausgestaltung der Erfindung dazu geeignet, das Signieren der Nachricht nach Dialog mit dem Nutzer durchzuführen. In einer weiteren Ausführungsform ist die erfindungsgemäß vorgesehene geänderte Softwarekomponente des Signiergeräts vorteilhafterweise in der Lage, mit der erfindungsgemäßen Chip-Karte zur Durchführung des erfindungsgemäßen Signierens kommunizieren zu können. In besonders vorteilhafter Ausgestaltung der Erfindung ist vorgesehen, daß die Signiervorrichtung des Signiergeräts zusätzlich Algorithmen abarbeiten kann, die die Anzeige der zu signierenden Nachricht im Anzeigefeld des Mobilfunktelefons ermöglichen.

In besonders vorteilhafter Weise stellt die vorliegende Erfindung also ein System zur Verfügung, gemäß dem lediglich Softwarekomponenten gegenüber in herkömmlicher Weise verwendeter Softwarekomponenten zu modifizieren sind. Eine Änderung der Hardware ist nicht notwendig.

In einer weiteren Ausgestaltung der Erfindung betrifft die Erfindung auch Chip-Karten für Mobilfunktelefone, insbesondere für die vorgenannten Mobilfunktelefone, wobei die Chip-Karte eine Signiervorrichtung umfaßt, die den geheimen Schlüssel des Nutzers speichern kann. In vorteilhafter Weise ist die Signiervorrichtung der Chip-Karte darüber hinaus in der Lage, aus einer vom Mobilfunktelefon empfangenen Nachricht, das heißt einer zu signierenden Nachricht, eine signierte Nachricht zu erstellen. Im Zusammenhang mit der vorliegenden Erfindung wird unter der Signiervorrichtung einer erfindungsgemäßen Chip-Karte also eine Vorrichtung verstanden, die den geheimen Schlüssel des Nutzers speichert, und in vorteilhafter Ausgestaltung auch das Signieren durchführt. Die Durchführung des Signierens muß jedoch nicht unmittelbar auf der Chip-Karte, sondern kann durch eine Software- und/oder Hardwarekomponente im Mobilfunktelefon erfolgen.

Weitere vorteilhafte Ausgestaltungen der Erfindung ergeben sich aus den Unteransprüchen.

Die Erfindung wird anhand der Figuren sowie des dazugehörigen Ausführungsbeispiels näher erläutert.

Die Figuren zeigen:
Figur 1 stellt den Ablauf des erfindungsgemäßen Verfahrens,
Figur 2 in schematischer Weise den Aufbau eines erfindungsgemäßen Mobilfunktelefons und
Figur 3 eine schematische Darstellung einer erfindungsgemäßen Chip-Karte dar.

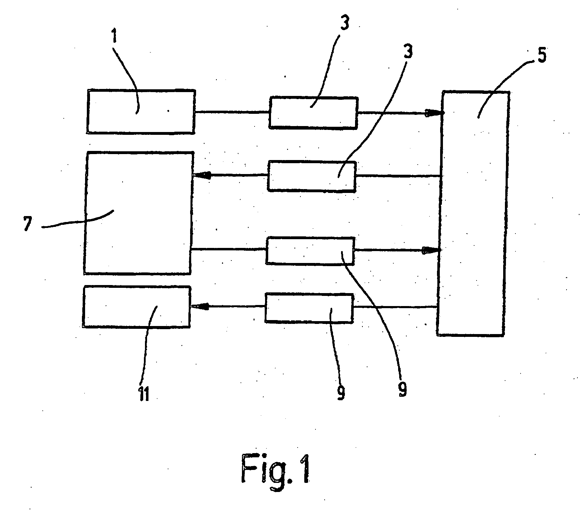

Die Figur 1 stellt die Sendevorrichtung 1, die in Form eines einen Texteditor oder ein Homebanking-Programm aufweisenden PCs ausgeführt sein kann, eine zu signierende Nachricht 3, eine Empfangsvorrichtung 5, die in Form eines Nachrichten-Servers ausgeführt ist, ein Mobilfunktelefon 7, eine signierte Nachricht 9 und einen Adressaten 11 dar.

Mittels eines in der Sendevorrichtung 1 enthaltenen Homebanking-Programms wird eine zu signierende Nachricht 3, beispielsweise per e-Mail an die Empfangsvorrichtung 5 gesendet. Die Empfangsvorrichtung 5 wandelt die empfangene zu signierende Nachricht 3 in eine Nachricht um, die an das Mobilfunktelefon 7 gesendet werden kann, insbesondere mittels eines Mobilfunknetzes, in vorteilhafter Ausgestaltung mittels des SMS. Die Empfangsvorrichtung 5 ordnet die zu signierende Nachricht 3 dem Mobilfunktelefon 7, beispielsweise mittels einer in der Empfangsvorrichtung 5 hinterlegten Information, zu. Es kann auch vorgesehen sein, daß die Zuordnung mittels einer von der Sendevorrichtung 1 zusammen mit der zu signierenden Nachricht 3 übermittelten Information erfolgt. Bei dieser Information handelt es sich im allgemeinen um die Mobilfunktelefonnummer.

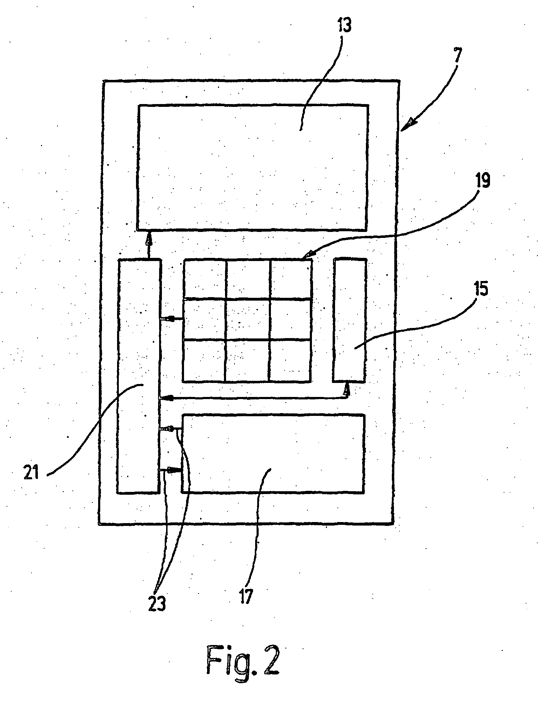

Im Mobilfunktelefon 7 wird die empfangene Nachricht 3 in einer Anzeigeeinrichtung 13 dargestellt. Die genaue Verfahrensweise wird in der Beschreibung zu Figur 2 näher erläutert. Nach Anzeige der zu signierenden Nachricht 3 in der Anzeigeeinrichtung 13 wird die zu signierende Nachricht 3 auf Anweisung des Benutzers signiert und die signierte Nachricht 9 an die Empfangsvorrichtung 5 oder auch an einen anderen Empfänger weitervermittelt. Die Übertragung der signierten Nachricht 9 vom Mobilfunktelefon 7 zur Empfangsvorrichtung 5 geschieht ebenfalls mittels SMS. Die Empfangsvorrichtung 5 kann die signierte Nachricht 9 mit der ursprünglichen zu signierenden Nachricht 3 vergleichen und anschließend an einen Adressaten 11 übermitteln. Die Übermittlung an den Adressaten 11 kann auf beliebigem Wege erfolgen.

Die Figur 2 stellt ein Mobilfunktelefon 7 dar. Das Mobilfunktelefon 7 umfaßt eine Anzeigeeinrichtung 13, eine Sende- und Empfangseinrichtung 15, eine Chip-Karten-Einrichtung 17, eine Tastatureinrichtung 19 und eine Signiervorrichtung 21.

Die von der Empfangsvorrichtung 5 übersandte zu signierende Nachricht 3 wird von der Sende- und Empfangseinrichtung 15 des Mobilfunktelefons 7 empfangen und gegebenenfalls aufbereitet an die Signiervorrichtung 21 weitergeleitet. Die Signiervorrichtung 21 sorgt für die interne Verwaltung des Signaturablaufs. Die Signiervorrichtung 21 enthält Softwarekomponenten zur Ansteuerung der Anzeigeeinrichtung 13, so daß die zu signierende Nachricht 3 visualisiert werden kann. Weiterhin wird die zu signierende Nachricht 3 innerhalb der Signiervorrichtung 21 signiert. Um den Signiervorgang durchführen zu können, muß die Signiervorrichtung 21 mit der Chip-Karten-Einrichtung 17 kommunizieren. Weiterhin ist es notwendig, daß die Signiervorrichtung 21 über die Tastatureinrichtung 19 entweder den geheimen Schlüssel direkt oder die PIN übermittelt bekommt. Wird über die Tastatureinrichtung 19 vom Benutzer die PIN eingegeben, die in der Regel kürzer ist, also weniger Stellen umfaßt als der geheime Schlüssel, so kann die PIN mittels eines Betriebssystems einer Chip-Karte 25 den unhandlichen gehei-men Schlüssel für den Signiervorgang quasi freigeben. Über eine bidirektional ausgelegte Verbindungsleitung 23 kann die Signiervorrichtung 21 mit der Chip-Karte 25 kommunizieren. Die Chip-Karten-Einrichtung 27 trägt dafür Sorge, daß die Befehle oder Kommandos der Signiervorrichtung 21 ausgeführt werden und die signierte Nachricht 9 über die Signiervorrichtung 21 an die Sende- und Empfangseinrichtung 15 weitergegeben wird. Das heißt, die Chip-Karten-Einrichtung 27 stellt eine Schnittstelle zwischen Signiervorrichtung 21 und der Chip-Karte 25 dar.

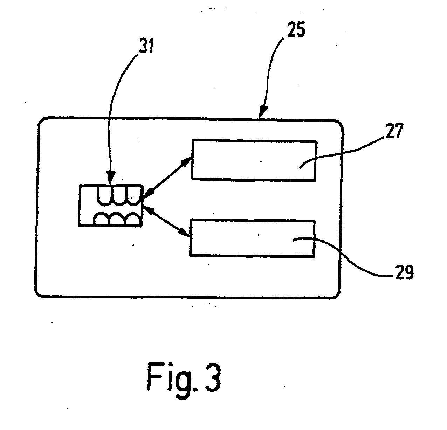

Die Figur 3 stellt in sehr vereinfachter schematischer Darstellung eine erfindungsgemäße Chip-Karte 25 dar. Diese umfaßt im wesentlichen ein Kontaktierpad 31 sowie eine Speichereinheit 27 und ein Kryptographiemodul 29. In der Speichereinheit 27 ist der für die Erstellung der signierten Nachricht 9 notwendige geheime Schlüssel abgelegt. Das Kryptographiemodul 29 dient der Verschlüsselung der zu signierenden Nachricht 3, beispielsweise mittels eines RSA-Verfahrens. Über das Kontaktierpad 31 kann die Speichereinheit 27 bzw. das Kryptographiemodul 29 mit der Chip-Karten-Einrichtung 27 in kommunikativer Verbindung stehen. Aus Gründen der Übersichtlichkeit sind weitere, für den Betrieb der Chip-Karte 25 notwendige Elemente wie beispielsweise ein Controller in der Darstellung der Figur 3 nicht dargestellt.

## Patentansprüche

1. Verfahren zum digitalen Signieren einer an eine Empfangsvorrichtung zu übertragenden Nachricht mittels eines Signiergeräts, **dadurch gekennzeichnet, dass** die zu signierende Nachricht (3) von einer Sendevorrichtung (1) an eine Empfangsvorrichtung (5), diese Nachricht anschließend von der Empfangsvorrichtung (5) über ein Telefonnetz an ein der Sendevorrichtung (1) zugeordnetes Signiergerät übertragen wird, diese Nachricht sodann im Signiergerät signiert und an die Empfangsvorrichtung (5) als signierte Nachricht (9) zurückübertragen wird, diese signierte Nachricht in der Empfangsvorrichtung mit der ursprünglichen Nachricht verglichen und authentifiziert wird, diese authentifizierte signierte Nachricht von der Empfangsvorrichtung an einen Adressaten, der nicht die Sendevorrichtung ist, weitervermittelt wird, wobei das Signiergerät ein Mobilfunktelefon (7) ist.

2. Verfahren nach Anspruch 1, wobei das Telefonnetz ein Mobilfunktelefonnetz ist.

3. Verfahren nach einem der vorhergehenden Anspruche, wobei zur Signierung ein Public-Key-Verfahren eingesetzt wird, insbesondere ein Public-Key-Verfahren, bei dem das Signiergerät über einen ihm zugeordneten geheimen Schlüssel und die Empfangsvorrichtung (5) über den entsprechenden, dem geheimen Schlüssel zugeordneten öffentlichen Schlüssel verfugt.

4. Verfahren nach einem der vorhergehenden Ansprüche, wobei die Nachrichten zwischen Empfangsvorrichtung (5) und Mobilfunktelefon (7) mittels des Short-Message-Service (SMS) übertragen werden.

5. Verfahren nach einem der vorhergehenden Anspruche, wobei die Nachricht (3) vor der Signierung mittels einer im Mobilfunktelefon (7) vorgesehenen Anzeigeeinrichtung (13) dargestellt wird.

6. Verfahren nach einem der vorhergehenden Ansprüche, wobei der zur Signierung notwendige geheime Schlüssel über eine Tastatureinrichtung des Mobilfunktelefons (7) eingegeben wird.

7. Verfahren nach einem der vorhergehenden Ansprüche, wobei der zur Signierung notwendige geheime Schlüssel in einer Chip-Karte des Mobilfunktelefons (7) abgelegt ist, und dieser Schlüssel mittels einer über eine Tastatureinrichtung des Mobilfunktelefons (7) eingebbaren Geheimzahl (PIN) freigegeben wird.

8. Verfahren nach einem der vorhergehenden Ansprüche, wobei die Chip-Karte die Erstellung der signierten Nachricht (9) durchführt.

9. Verfahren nach einem der vorhergehenden Ansprüche, wobei das Mobilfunktelefon (7) die Erstellung der signierten Nachricht (9) durchfuhrt und wobei der geheime Schlüssel aus der Chip-Karte (25) gelesen wird.

10. Verfahren nach einem der vorhergehenden Ansprüche, wobei das Mobilfunktelefon (7) zusätzlich als Sender zur Übermittlung der signierten Nachricht (9) an die Empfangsvorrichtung (5) dient.

## Claims

1. Method for digitally signing, by means of a signing apparatus, a message to be transmitted to a receiving device, **characterised in that** the message (3) to be signed is transmitted from a transmitting device (1) to a receiving device (5), this message is then transmitted from the receiving device (5) via a telephone network to a signing apparatus associated with the transmitting device (1), this message is then signed in the signing apparatus and transmitted back to the receiving device (5) as a signed message (9), this signed message is compared with the original message in the receiving device and authenticated, this authenticated signed message is forwarded from the receiving device to an addressee, which is not the transmitting device, wherein the signing apparatus is a mobile telephone (7).

2. Method according to claim 1, wherein the telephone network is a mobile telephone network.

3. Method according to one of the preceding claims, wherein a public key method is used for signing, especially a public key method in which the signing apparatus has a private key allocated to it and the receiving device (5) has the corresponding public key associated with the private key.

4. Method according to one of the preceding claims, wherein the messages between the receiving device (5) and the mobile telephone (7) are transmitted by means of the short message service (SMS).

5. Method according to one of the preceding claims, wherein the message (3) is represented before signing by means of a display device (13) provided in the mobile telephone (7).

6. Method according to one of the preceding claims, wherein the private key necessary for the signing is input via a keypad device of the mobile telephone (7).

7. Method according to one of the preceding claims, wherein the private key necessary for the signing is deposited in a chip card of the mobile telephone (7), and this key is enabled by means of a private number (PIN) which can be input via a keypad device of the mobile telephone (7).

8. Method according to one of the preceding claims, wherein the chip card carries out the production of the signed message (9).

9. Method according to one of the preceding claims, wherein the mobile telephone (7) carries out the production of the signed message (9) and wherein the private key is read from the chip card (25).

10. Method according to one of the preceding claims, wherein the mobile telephone (7) serves in addition as a transmitter to transmit the signed message (9) to the receiving device (5).

## Revendications

1. Procédé de signature numérique d'un message à transmettre à un dispositif de réception avec un appareil de signature, **caractérisé en ce que** le message (3) à signer, est transmis par un dispositif d'émission (1) à un dispositif de réception (5), ce message étant ensuite transmis par le dispositif de réception (5) par l'intermédiaire d'un réseau téléphonique à un appareil de signature associé au dispositif d'émission (1), ce message étant ensuite signé dans l'appareil de signature et transmis en retour au dispositif de réception (5) comme message signé (9), ce message signé étant comparé avec le message original dans le dispositif de réception et étant authentifié, ce message signé authentifié étant transféré par le dispositif de réception à un destinataire qui n'est pas le dispositif d'émission, l'appareil de signature étant un téléphone mobile (7).

2. Procédé selon la revendication 1, **caractérisé en ce que** le réseau téléphonique est un réseau téléphonique mobile.

3. Procédé selon l'une quelconque des revendications précédentes, **caractérisé en ce que** pour signer, on utilise un procédé de codage public, notamment un procédé de codage public dans lequel l'appareil de signature dispose d'une clé secrète qui lui est attribuée et le dispositif de réception (5) dispose d'une clé publique correspondante, associée à la clé secrète.

4. Procédé selon l'une quelconque des revendications précédentes, **caractérisé en ce que** les messages sont transmis entre le dispositif de réception (5) et le téléphone mobile (7) par le service des messages courts (SMS).

5. Procédé selon l'une quelconque des revendications précédentes, **caractérisé en ce que** le message (3) est présenté par une installation d'affichage (13) équipant le téléphone mobile (7) avant d'être signé.

6. Procédé selon l'une quelconque des revendications précédentes, **caractérisé en ce que** la clé secrète nécessaire à la signature s'introduit par le clavier du téléphone mobile (7).

7. Procédé selon l'une quelconque des revendications précédentes, **caractérisé en ce que** la clé secrète nécessaire à la signature est enregistrée dans une carte à puce du téléphone mobile (7) et cette clé est libérée par un code secret (PIN) que l'on introduit par le clavier du téléphone mobile (7).

8. Procédé selon l'une quelconque des revendications précédentes, **caractérisé en ce que** la carte à puce établit le message signé (9).

9. Procédé selon l'une quelconque des revendications précédentes, **caractérisé en ce que** le téléphone mobile (7) établit le message signé (9) et la clé secrète est lue dans la carte à puce (25).

10. Procédé selon l'une quelconque des revendications précédentes, **caractérisé en ce que** le téléphone mobile (7) sert de plus d'émetteur pour transmettre le message signé (9) vers le dispositif de réception (5).
